# EUROPÄISCHE PATENTSCHRIFT

(11) **EP 2 191 753 B1**
(45) Veröffentlichungstag und Bekanntmachung des Hinweises auf die Patenterteilung: **08.08.2012**
(21) Anmeldenummer: 09175453.1
(22) Anmeldetag: 10.11.2009
(51) Int. Cl.: A47J 31/44

(54) **Getränkeautomat**
Beverage dispenser
Distributeur de boissons

(30) Priorität: 28.11.2008 DE 102008044151
(43) Veröffentlichungstag der Anmeldung: 02.06.2010
(73) Patentinhaber: BSH Bosch und Siemens Hausgeräte GmbH, 81739 München (DE)
(72) Erfinder: Gerl, Bernhard, 83278 Traunstein (DE); Haslacher, Christian, 5303 Thalgau (AT)

(56) Entgegenhaltungen:
- DE-U1- 20 017 859
- FR-A- 2 879 426
- US-A- 3 079 485

## Beschreibung

Die vorliegende Erfindung betrifft einen Getränkeautomaten, insbesondere einen Kaffeeautomaten, mit einem höhenverstellbaren Getränkeauslauf gemäß dem Oberbegriff des Anspruchs 1.

Ein derartiger Getränkeautomat mit einem höhenverstellbaren Auslauf ist beispielsweise aus der DE 20 2004 020 916 U1 bekannt, ebenso wie aus der DE 200 17 859 U1. Beiden Getränkeautomaten ist dabei gemein, einen Getränkeauslauf bezüglich seiner Höhe einfach an unterschiedlich große Getränkegefäße, wie beispielsweise Gläser oder Tassen, anpassen zu können. Die Höhenverstellung des Getränkeauslaufs ist dabei auch von Vorteil, wenn es darum geht, Verunreinigungen im Befüllbereich des Getränkebehälters zu vermeiden, wie diese beispielsweise bei einem zu hoch montierten statischen Getränkeauslauf beim Befüllen einer kleinen Espressotasse auftreten können. Da der Getränkeauslauf üblicherweise ein Eigengewicht aufweist, muss ein Haltemechanismus so stark sein, dass der Getränkeauslauf nicht von alleine nach unten rutschen kann. Hierfür können beispielsweise mechanische Rastvorrichtungen verwendet werden, die ein eigenmächtiges Herabrutschen vermeiden. Derartige mechanische Rastvorrichtungen sind jedoch konstruktiv aufwändig und erzeugen beim Verstellen des höhenverstellbaren Getränkeauslaufs ein unangenehmes Geräusch.

Weitere Getränkeautomaten mit einem höhenverstellbaren Getränkeauslauf sind beispielsweise aus der DE 200 17 859 U1, aus der DE 10 2004 004 835 A1 sowie aus der DE 20 2004 020 982 U1 bekannt.

Die vorliegende Erfindung beschäftigt sich mit dem Problem, für einen Getränkeautomaten der gattungsgemäßen Art, eine verbesserte oder eine alternative Ausführungsform anzugeben, mit welcher insbesondere die Kundenzufriedenheit gesteigert werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Getränkeautomaten mit einem höhenverstellbaren Getränkeauslauf vorzusehen, wobei das Gewicht des Getränkeauslaufes mittels eines entsprechenden Gegengewichtes kompensiert wird, wodurch der Getränkeauslauf besonders Kraft sparend und einfach bezüglich seiner Höhe verstellt werden kann. Ein entsprechendes Gegengewicht lässt sich dabei konstruktiv einfach in einen entsprechenden Getränkeautomaten integrieren, wodurch mit dem besonders einfach höhenverstellbaren Getränkeauslauf beim Kunden der Eindruck, sich einem besonders qualitativ hochwertigen Gerät gegenüberzusehen, geweckt werden kann. Darüber hinaus ermöglicht die einfache Höhenverstellung des Getränkeauslaufs eine schnelle Anpassung desselben an unterschiedlich hohe Getränkegefäße, wodurch das Handling des erfindungsgemäßen Getränkeautomatens einfacher wird. Durch das Gegengewichtist darüber hinaus eine stufenlose Höhenverstellung des Getränkeauslaufs möglich, so dass dieser nicht entsprechende, vorgegebene und oftmals nicht an unterschiedliche Getränkegefäße individuell anpassbare Rastlagen gebunden ist. Mittels des erfindungsgemäßen Getränkeautomatens, kann somit eine besonders hohe Kundenzufriedenheit erreicht werden.

Bei einer vorteilhaften Weiterbildung der erfindungsgemäßen Lösung, ist der höhenverstellbare Getränkeauslauf auf einem beweglichen Schlitten angeordnet, welcher an oder in einer getränkeautomatenseitigen Führungsschiene gleitet und wobei der bewegliche Schlitten und damit der Getränkeauslauf über einen mittels einer Umlenkrolle umgelenkten Seilzug mit dem Gegengewicht verbunden ist. Dies stellt nahezu die einfachste konstruktive Ausführungsform der Verbindung zwischen dem Gegengewicht und dem Getränkeauslauf dar, wobei das Gegengewicht vom Benutzer unsichtbar innerhalb des Gehäuses geführt werden kann. Die Verbindung zwischen dem Getränkeauslauf und dem Gegengewicht mittels des erfindungsgemäßen Seilzuges, lässt sich darüber hinaus äußerst kostengünstig realisieren und dürfte aller Voraussicht nach über die gesamte Lebensdauer des Getränkeautomatens wartungsfrei funktionieren.

Bei einer vorteilhaften Weiterbildung der erfindungsgemäßen Lösung, sind der bewegliche Schlitten und damit der Getränkeauslauf über ein mechanisches Getriebe mit dem Gegengewicht verbunden. Ein derartiges mechanisches Getriebe kann beispielsweise mittels jeweils am beweglichen Schlitten und am Gegengewicht angeordneten Zahnstangen verwirklicht werden, welche in ein dazwischen liegendes gemeinsames Zahnrad eingreifen bzw. mit diesem kämmen. Im Vergleich zu einer Verbindung zwischen dem Getränkeauslauf und dem Gegengewicht mittels eines Seilzuges, weist die Verbindung mittels eines Getriebes den großen Vorteil auf, dass die Kompensation des Gewichtes des Getränkeauslaufs durch das Gegengewicht auch bei leicht schräg bei einem Getränkeautomaten zuverlässig gewährleistet werden kann. Von besonderem Vorteil dürfte darüber hinaus sein, dass eine Bewegung des Gegengewichtes ohne eine entsprechende Bewegung des Getränkeauslaufs, wie dies beispielsweise bei einer Verbindung mittels Seilzug bei einem unsachgemäßen Lagern oder Kippen des Getränkeautomatens der Fall sein kann, wirkungsvoll ausgeschlossen wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen über einen Seilzug mit einem Gegengewicht verbundenen Getränkeauslauf,
- Fig. 2: einen über ein Getriebe mit einem Gegengewicht verbundenen Getränkeauslauf,
- Fig. 3: einen nichterfindungsgemäßen Getränkeauslauf, dessen Gewicht mittels einer Rollfeder kompensierbar ist,
- Fig. 4: einen mittels einem wippenartigen Hebel mit einem Gegengewicht verbundenen Getränkeauslauf.

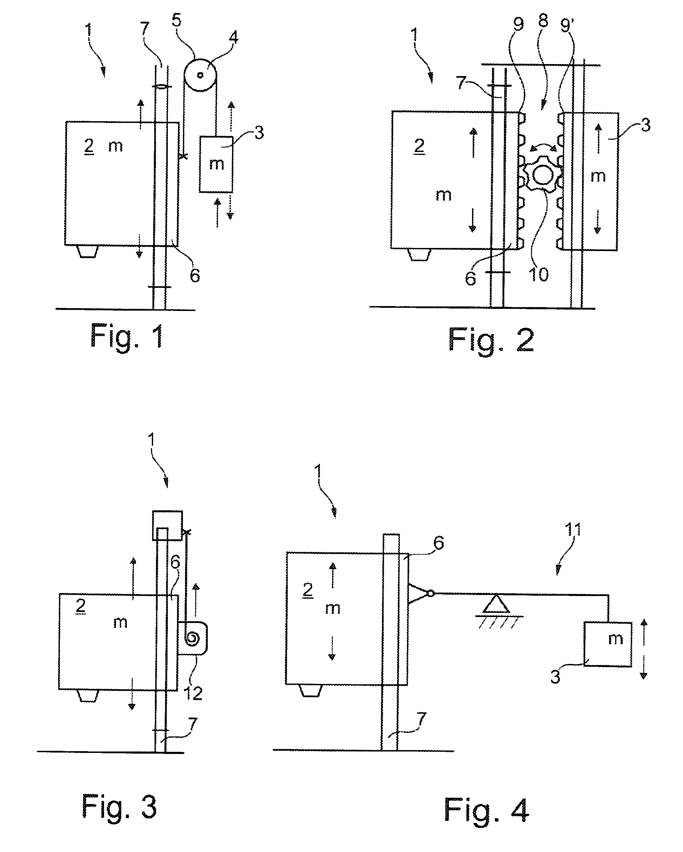

Entsprechend der Fig. 1, weist ein lediglich teilweise dargestellter Getränkeautomat 1, welcher beispielsweise als Kaffeevollautomat ausgebildet ist, einen höhenverstellbaren Getränkeauslauf 2 auf. Zur Höheneinstellung des Getränkeauslaufes 2 ist dieser mit einem das Gewicht m des Getränkeauslaufs 2 kompensierenden Gegengewicht 3 verbunden und zwar gemäß der Fig. 1 über einen mittels einer Umlenkrolle 4 umgelenkten Seilzug 5. Der Getränkeauslauf 2 ist dabei auf einem beweglichen Schlitten 6 angeordnet, der an oder in einer getränkeautomatenseitigen Führungsschiene 7 gleitet. Über das Gegengewicht 3, dessen Gewicht m im Wesentlichen demjenigen des Getränkeauslaufs 2 entspricht, kann dieser händisch äußerst einfach und leicht bezüglich seiner Höhe verstellt werden, so dass eine Höhe des Getränkeauslaufs 2 an unterschiedlich hohe Getränkegefäße, beispielsweise eine Espressotasse oder ein Latte Macchiato-Glas, anpassbar ist.

Bei der Darstellung gemäß der Fig. 2, ist der Getränkeauslauf 2 über ein mechanisches Getriebe 8 mit dem Gegengewicht 3 verbunden, wobei am beweglichen Schlitten 6 und am Gegengewicht 3 jeweils eine Zahnstange 9, 9' vorgesehen ist, die über ein dazwischen liegendes Zahnrad 10 miteinander wirkungsverbunden sind. Das Wirkungsprinzip zwischen den Fig. 1 und 2 ist dabei dasselbe, so dass sich die beiden Darstellungen lediglich in einem unterschiedlichen Übertragungsmechanismus unterscheiden.

Bei der Darstellung gemäß der Fig. 4 ist der bewegliche Schlitten 6 und damit der Getränkeauslauf 2 über einen wippenartig gelagerten Hebel 11 mit dem Gegengewicht 3 verbunden, wobei der wippenartige Hebel 11 üblicherweise sowohl am Getränkeauslauf 2 als auch am Gegengewicht 3 gelenkig angebunden ist.

Bei der gemäß der Fig. 3 dargestellten nichterfindungsgemäßen Ausführungsform, ist anstelle des Gegengewichtes eine Federeinrichtung 12 vorgesehen, welche gemäß der Fig. 3 als Rollfeder ausgebildet ist, und welche einen Ends am Schlitten 6, das heißt am Getränkeauslauf 2, und anderen Ends an einem oberen Ende der Führungsschiene 7 angebunden ist.

Die Federeinrichtung 12 bewirkt dabei ebenfalls eine Kompensation des Gewichtes m des Getränkeauslaufs 2, jedoch ohne Gegengewicht, sondern lediglich aufgrund ihrer Federkraft. Im Unterschied zu den gemäß den Fig. 1, 2 und 4 dargestellten Ausführungsformen, kann bei einer Ausführung mit einer Federeinrichtung 12 das Gesamtgewicht des Getränkeautomatens 1 um das Gewicht des Gegengewichtes 3 reduziert werden. Die Federeinrichtung 12 weist dabei üblicherweise eine äußerst flache bzw. beinah waagerechte Federkennlinie auf. Selbstverständlich ist dabei auch eine umgekehrte Befestigung der Federeinrichtung 12 denkbar, so dass diese nicht am Schlitten, sondern am oberen Ende der Führungsschiene 7 angeordnet wird und das ausziehbare Ende der Federeinrichtung 12 mit dem Schlitten 6 verbunden wird. Die konstante Kraft der Rollfeder führt üblicherweise dazu, dass das Gewicht, respektive die Masse m des Getränkeauslaufs 2 in jeder Lage kompensiert wird.

Generell weisen derartig ausgestattete Getränkeautomaten folgende Vorteile auf:
- ein Herunterrutschen bzw. ein Herunterfallen des Getränkeauslaufs 2 kann in allen Situationen, insbesondere auch bei Vibrationen im Getränkeautomat 1 oder einer Erwärmung desselben, zuverlässig verhindert werden,
- eine Abstimmung der Kleideigenschaften des Getränkeauslaufes 2 kann vereinfacht werden,
- auch schwere Getränkeausläufe 2 können durch die Erfindung leichtgängig geführt werden,
- eine Verschiebekraft zum Verstellen des Getränkeauslaufes ist sowohl nach oben als auch nach unten gleich.

### Bezugszeichenliste

- 1: Getränkeautomat
- 2: Getränkeauslauf
- 3: Gegengewicht
- 4: Umlenkrolle
- 5: Seilzug
- 6: Schlitten
- 7: Führungsschiene
- 8: Getriebe
- 9: Zahnstange
- 10: Zahnrad
- 11: Hebel
- 12: Federeinrichtung

- m: Masse

## Patentansprüche

1. Getränkeautomat (1), insbesondere ein Kaffeevollautomat, mit einem höhenverstellbaren Getränkeauslauf (2), **dadurch gekennzeichnet, dass** zur Höheneinstellung des Getränkeauslaufs (2) ein das Gewicht (m) des Getränkeauslaufs (2) kompensierendes Gegengewicht (3) vorgesehen ist.

2. Getränkeautomat nach Anspruch 1, **dadurch gekennzeichnet, dass** der höhenverstellbare Getränkeauslauf (2) auf einem beweglichen Schlitten (6) angeordnet ist, der an oder in einer getränkeautomatenseitigen Führungsschiene (7) gleitet.

3. Getränkeautomat nach Anspruch 2, **dadurch gekennzeichnet, dass** der bewegliche Schlitten (6) und damit der Getränkeauslauf (2) über einen mittels einer Umlenkrolle (4) umgelenkten Seilzug (5) mit dem Gegengewicht (3) verbunden ist.

4. Getränkeautomat nach Anspruch 2, **dadurch gekennzeichnet, dass** der bewegliche Schlitten (6) und damit der Getränkeauslauf (2) über einen wippenartig gelagerten Hebel (11) mit dem Gegengewicht (3) verbunden ist.

5. Getränkeautomat nach Anspruch 2, **dadurch gekennzeichnet, dass** der bewegliche Schlitten (6) und damit der Getränkeauslauf (2) über ein mechanisches Getriebe (8) mit dem Gegengewicht (3) verbunden ist.

6. Getränkeautomat nach Anspruch 5, **dadurch gekennzeichnet, dass** am beweglichen Schlitten (6) und am Gegengewicht (3) jeweils eine Zahnstange (9,9') vorgesehen ist, die über ein dazwischen liegendes Zahnrad (10) miteinander wirkungsverbunden sind.

## Claims

1. Beverage machine (1), particularly a coffee machine, with a beverage outlet (2) adjustable in height, **characterised in that** for height adjustment of the beverage outlet (2) a counterweight (3) compensating for the weight (m) of the beverage outlet (2) is provided.

2. Beverage machine according to claim 1, **characterised in that** the beverage outlet (2) adjustable in height is arranged on a movable slide (6) which slides at or in a guide rail (7) at the beverage machine.

3. Beverage machine according to claim 2, **characterised in that** the movable slide (6) and thus the beverage outlet (2) are connected with the counterweight (3) by way of a cable pull (5) deflected by means of a deflecting roller (4).

4. Beverage machine according to claim 2, **characterised in that** the movable slide (6) and thus the beverage outlet (2) are connected with the counterweight (3) by means of a lever (11) mounted in the manner of a rocker.

5. Beverage machine according to claim 2, **characterised in that** the movable slide (6) and thus the beverage outlet (2) are connected with the counterweight (3) by way of mechanical transmission (8).

6. Beverage machine according to claim 5, **characterised in that** a respective rack (9, 9') is provided at each of the movable slide (6) and the counterweight (3), the racks being operatively connected together by way of an intermediately disposed gearwheel (10).

## Revendications

1. Distributeur de boissons (1), notamment distributeur de café entièrement automatique, comprenant une sortie de boisson (2) réglable en hauteur, **caractérisé en ce qu'**un contrepoids (3) compensant le poids (m) de la sortie de boisson (2) est ménagé pour le réglage en hauteur de la sortie de boisson (2).

2. Distributeur de boissons selon la revendication 1, **caractérisé en ce que** la sortie de boisson (1) réglable en hauteur est disposée sur un chariot mobile (6) qui glisse sur ou dans un rail de guidage (7) côté distributeur de boissons.

3. Distributeur de boissons selon la revendication 2, **caractérisé en ce que** le chariot mobile (6), et donc la sortie de boisson (2), est relié au contrepoids (3) par l'intermédiaire d'un câble (5) renversé au moyen d'une poulie de renvoi (4).

4. Distributeur de boissons selon la revendication 2, **caractérisé en ce que** le chariot mobile (6), et donc la sortie de boisson (2), est relié au contrepoids (3) par l'intermédiaire d'un levier (11) logé de manière semblable à une bascule.

5. Distributeur de boissons selon la revendication 2, **caractérisé en ce que** le chariot mobile (6), et donc la sortie de boisson (2), est relié au contrepoids (3) par l'intermédiaire d'un mécanisme mécanique (8).

6. Distributeur de boissons selon la revendication 5, **caractérisé en ce qu'**une crémaillère (9, 9') est respectivement ménagée sur le chariot mobile (6) et sur le contrepoids (3), lesquelles sont reliées activement entre elles par l'intermédiaire d'une roue dentée (10) placée entre les deux.
